# FASCICULE DE BREVET EUROPEEN

(11) **EP 0 732 852 B1**
(45) Date de publication et mention de la délivrance du brevet: **08.09.1999**
(21) Numéro de dépôt: 96200585.6
(22) Date de dépôt: 05.03.1996
(51) Int. Cl.: H04N 7/22, H04N 7/173

(54) **Réseau câblé de télévision avec voie montante**
Kabelfernsehnetzwerk mit Aufwärtsübertragungskanal
Cable television network with upstream path

(30) Priorité: 15.03.1995 FR 9503014
(43) Date de publication de la demande: 18.09.1996
(73) Titulaire: PHILIPS ELECTRONIQUE GRAND PUBLIC, 92150 Suresnes (FR); Koninklijke Philips Electronics N.V., 5621 BA Eindhoven (NL)
(72) Inventeur: Benard, François, Société Civile S.P.I.D., F-75008 Paris (FR)
(74) Mandataire: Caron, Jean

(56) Documents cités:
- WO-A-93/05619
- CABLE TV SESSIONS, MONTREUX, JUNE 10 - 15, 1993, no. SYMP. 18, 11 Juin 1993, POSTES;TELEPHONES ET TELEGRAPHES SUISSES, pages 108-129, XP000379341 BAMBACH W ET AL: "DIAMANT - AN ECONOMIC SOLUTION FOR THE INTRODUCTION OF DIGITAL TRANSMISSION OF ANALOGUE AND DIGITAL AUDIO AND VIDEO CHANNELS"
- JOURNAL OF LIGHTWAVE TECHNOLOGY, vol. 11, no. 1, 1 Janvier 1993, pages 106-115, XP000377990 TOSHIYUKI TSUCHIYA: "ANALYSIS AND DESIGN FOR OPTICAL VIDEO TRANSPORT/DISTRIBUTION SYSTEM WITH VIDEO ON DEMAND SERVICE"

## Description

La présente invention concerne un procédé pour transmettre des messages remontants dans un réseau câblé de télévision comprenant un chemin arborescent spécifique pour la remontée de messages, chemin qui comprend une pluralité de branches dites montantes, chacune constituées d'une fibre optique

Elle concerne aussi un réseau câblé de télévision comprenant un chemin arborescent, dit principal, que des signaux suivent en partant d'un centre de transmission, et qui comprend une pluralité de branches dites descendantes, chacune constituées d'une fibre optique, et un second chemin arborescent, dit montant, que des signaux suivent pour remonter vers le centre de transmission, et qui comprend une pluralité de branches dites montantes, chacune constituées d'une fibre optique et respectivement parallèle à une branche du chemin principal

Elle concerne enfin une station intermédiaire, dite "embranchement", destinée à être utilisée dans un tel réseau.

Un réseau correspondant au préambule ci-dessus est connu du document WO 93/05619. Le réseau décrit dans ce document comporte une tête de réseau et plusieurs stations, chacune reliée directement à la tête. Les liaisons sont faites à chaque fois par une fibre optique descendante doublée d'une fibre optique montante. Les messages montants modulent une porteuse haute-fréquence.

Un objet de l'invention est de fournir un réseau en fibres optiques de type arborescent permettant la remontée rapide d'informations, avec un minimum de mémoire au niveau de chaque récepteur optique, sans interrogation de la part de la station de tête. Un problème se pose du fait que, dans le chemin montant, un embranchement n'a aucun moyen de faire redescendre un accusé de réception, permettant de confirmer qu'il a reçu correctement un message venu d'aval, à moins de passer par le chemin descendant, ce qui serait lourd à mettre en oeuvre.

A cet effet, le procédé selon l'invention est caractérisé en ce que, dans un embranchement entre une branche amont et plusieurs branches aval, comportant un émetteur muni d'un convertisseur pour engendrer, à partir d'une séquence de messages sous forme d'un signal électrique, un signal lumineux transmis vers l'amont, et , pour chaque branche aval, un récepteur muni d'un convertisseur qui, à partir d'un signal lumineux venant de la branche aval, engendre un message sous forme d'un signal électrique,
- on enregistre, dans une mémoire de réception, un message reçu d'aval et muni d'un code de reconnaissance,
- à partir de messages reçus par les récepteurs et d'un message, dit de type local, généré dans l'embranchement même pour être transmis vers l'amont, on détermine une séquence de messages à émettre qui comprend d'abord des messages qui répètent en différé les messages reçus par les récepteurs et, à la fin, le message de type local, dont la présence indique que la séquence est terminée,
- on répète indéfiniment la même séquence, avec mise à jour éventuelle du contenu d'un message.

Dans un réseau câblé de télévision comportant au moins un embranchement entre une branche amont et plusieurs branches aval, un tel embranchement comporte
- un récepteur pour chaque branche aval, qui comprend
   - un convertisseur pour, à partir d'un signal lumineux venant de la branche aval, engendrer un message sous forme d'un signal électrique,
   - et un processeur muni d'instructions pour commander l'enregistrement, dans une mémoire de réception, de ce message, muni d'un code de reconnaissance,
- un émetteur qui comprend
   - un processeur muni d'instructions pour
      - à partir de données numériques représentant, d'une part des messages reçus par les récepteurs et, d'autre part un message, dit de type local, généré dans l'embranchement même pour être transmis vers l'amont, déterminer une séquence de messages à émettre, cette séquence comprenant
         - d'abord des messages qui répètent en différé les messages reçus par les récepteurs,
         - et à la fin le message de type local, dont la présence indique que la séquence est terminée,
      - et pour commander indéfiniment la répétition d'une même séquence, avec mise à jour éventuelle du contenu d'un message,
   - et un convertisseur pour engendrer, à partir de la séquence de messages, un signal lumineux transmis vers l'amont.

L'invention est donc basée sur l'idée d'assurer que les messages parviennent toujours à un récepteur amont dans un ordre prédéterminé, ce qui lui permet de s'assurer qu'il a bien reçu tous les messages.

Selon une forme particulière de réalisation du procédé, on interroge périodiquement les mémoires de réception, et on enregistre dans la mémoire de réception un message reçu d'aval, seulement si le message enregistré précédemment a été lu par l'émetteur.

Après qu'un certain message a été fourni à l'émetteur en réponse à une interrogation, et pendant que d'autres messages continuent d'arriver au récepteur de façon répétitive, avec parmi eux le dit certain message, on attend avantageusement une nouvelle occurrence du dit certain message sans procéder à aucun enregistrement, et on enregistre alors le message qui suit le dit certain message, et on teste si le dernier message, reçu en réponse à l'interrogation périodique d'un récepteur, est un message de type local en provenance de l'embranchement aval et,
- dans ce cas, on procède à l'interrogation périodique d'un autre récepteur,
- dans le cas contraire, on continue à interroger à nouveau le même récepteur.

On insère avantageusement un message destiné exclusivement à l'embranchement situé immédiatement en amont, entre chacun des autres messages.

Ceci permet qu'un tel message destiné exclusivement à l'embranchement situé immédiatement en amont parvienne plus rapidement à destination.

Dans un réseau câblé de télévision et dans une station intermédiaire d'un tel réseau, des processeurs sont munis d'instructions pour commander la réalisation du procédé exposé ci-dessus.

Ces aspects de l'invention ainsi que d'autres aspects plus détaillés apparaîtront plus clairement grâce à la description suivante d'un mode de réalisation constituant un exemple non limitatif.

La figure 1 représente schématiquement un réseau selon l'invention.

La figure 2 représente schématiquement un système à micro-processeur dans un récepteur ou dans un émetteur de chemin montant.

La figure 3 est un diagramme illustrant le processus mis en oeuvre dans un récepteur de chemin montant.

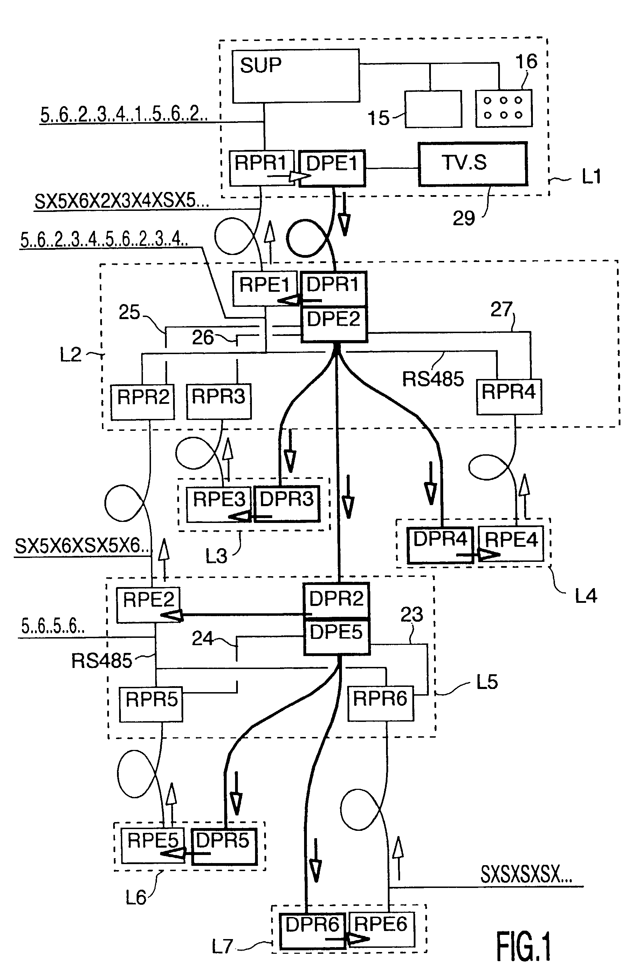

Le réseau représenté à titre d'exemple sur la figure 1 est muni de deux chemins arborescents parallèles entre eux, un chemin arborescent principal, dit "voie descendante" ou "chemin descendant", et un chemin arborescent de remontée d'informations, dit "voie montante" ou "chemin montant".

Un superviseur SUP assure la gestion de tout le réseau. Il est constitué essentiellement, par exemple, d'un ordinateur de type "PC" avec ses périphériques habituels, non représentés, tels que imprimante et moniteur, et comporte une liaison par bus série avec des éléments externes 15, 16, dont entre autres une batterie de voyants d'alarme et/ou d'information 16.

Le chemin principal ("descendant") part d'une source de signaux de télévision 29, qui est reliée à un émetteur DPE1 de voie descendante, dans lequel un laser produit des signaux lumineux qui sont conduits par une fibre optique à un récepteur de voie descendante DPR1. Ce récepteur DPR1 transforme les signaux lumineux venant du centre de transmission en signaux électriques, lesquels sont repris et transformés en signaux lumineux par un émetteur de voie descendante DPE2. Cet émetteur alimente trois fibres optiques reliées respectivement à trois récepteurs de voie descendante DPR2, DPR3, DPR4. Les récepteurs DPR3 et DPR4 sont des récepteurs d'extrémité de branche. Par contre, le récepteur DPR2 transforme les signaux lumineux venant de l'émetteur DPE2 en signaux électriques, lesquels sont repris et transformés en signaux lumineux par un émetteur de voie descendante DPE5. Cet émetteur alimente deux fibres optiques reliées respectivement à un récepteur de voie descendante DPR5, et à un récepteur de voie descendante DPR6, qui sont des récepteurs d'extrémité de branche.

Le chemin montant arrive au superviseur SUP via un récepteur de voie montante RPR1, alimenté par une fibre optique qui vient d'un émetteur de voie montante RPE1. Cet émetteur RPE1 reçoit des signaux électriques qui lui sont amenés par un bus, ici de type RS485, depuis trois récepteurs de voie montante RPR2, RPR3, RPR4, et les transforme en signaux lumineux. Chacun des trois récepteurs RPR2, RPR3, RPR4, transforme un signal lumineux, qu'il reçoit respectivement des émetteurs RPE2, RPE3, RPE4, en un signal électrique qu'il mémorise d'abord, et applique sur le bus RS485, quand l'émetteur RPE1 le lui demande.

Les émetteurs RPE3 et RPE4 sont des émetteurs d'extrémité de branche. Par contre, l'émetteur RPE2 est relié par un bus de type RS485 à deux récepteurs de voie montante RPR5, RPR6. Chacun de ces deux récepteurs est relié par une fibre optique à un émetteur de voie montante respectivement RPE5, RPE6, qui sont des émetteurs d'extrémité de branche. Une flèche verticale indique pour chaque fibre optique le sens de transmission des données. Le superviseur ainsi que l'émetteur DPE1 et le récepteur RPR1 sont situés en un même lieu L1, qui est le centre de transmission et le centre de gestion du réseau. Les récepteurs DPR1, RPR2, RPR3, RPR4, et les émetteurs RPE1, DPE2, sont situés tous ensemble en un autre lieu L2, distant du lieu L1. Un tel lieu est un embranchement, qui constitue un relais électro-optique dans lequel un signal lumineux dans une fibre optique est transformé en un signal électrique, son contenu informatif est éventuellement complété, puis le signal est à nouveau converti en un signal lumineux. Un embranchement est commun aux deux chemins. L'embranchement L2 est situé entre, d'une part, une branche amont qui vient du centre de gestion L1 et, d'autre part, trois branches aval qui vont ici respectivement à un autre embranchement L5, et à des lieux L3 et L4, tous deux à l'extrémité d'une branche.

Les récepteurs DPR2, RPR5, RPR6, et les émetteurs RPE2, DPE5, sont situés dans l'autre embranchement L5, lequel constitue un relais électro-optique, pour chacun des chemins, entre une branche amont qui vient du centre L2, et deux branches aval qui vont respectivement à un lieu L6 et à un lieu L7, tous deux à l'extrémité d'une branche. Dans les lieux L3, L4, L6, L7 sont situés respectivement les éléments d'extrémité RPE3 et DPR3, RPE4 et DPR4, RPE5 et DPR5, RPE6 et DPR6.

Chacune des branches de la voie remontante est respectivement parallèle à une branche de la voie descendante, c'est-à-dire que le lieu de départ de l'une est le lieu d'arrivée de l'autre, et vice-versa.

La voie montante a entre autres pour but de faire remonter jusqu'au superviseur des messages d'information et de gestion, contenant des indications sur l'état du réseau, par exemple un taux de contrôle automatique de gain local, des puissances reçues dans les fibres, des données concernant les alimentations, la température, etc. En chacun des lieux sont prévus des moyens pour mesurer des variables d'état et pour détecter des anomalies, une absence de signal, l'arrêt d'un ventilateur, etc. Un récepteur de voie descendante, par exemple, s'il détecte une absence de signal, transmet un message d'information locale à l'émetteur de voie montante qui est situé dans le même lieu. Par exemple le récepteur de voie descendante DPR1 transmet un message à l'émetteur de voie montante RPE1. Un tel message est symbolisé à chaque fois par une flèche horizontale sur la figure. Un message issu de DPR6 par exemple atteint le superviseur via RPE6, RPR6, RPE2, RPR2, RPE1, RPR1. Le superviseur peut alors par exemple activer une alarme, et/ou imprimer une note destinée à informer un dépanneur.

Il est aussi prévu une liaison entre un récepteur de voie montante, par exemple RPR2, et l'émetteur de voie descendante correspondant, par exemple DPE2, pour réaliser certaines opérations en local. Par exemple si une rupture de fibre est détectée entre DPE2 et DPR2, il serait dangereux que le laser de DPE2 continue à émettre, au cas où un technicien serait présent à l'endroit de la rupture. Alors DPR2 donne à RPE2 l'information, laquelle est fournie à RPR2, et l'ordre d'arrêt du laser de DPE2 est traité en local via la connexion 25 entre RPR2 et DPE2. Des tentatives périodiques de remise en route seront alors faites à intervalles réguliers. De telles liaisons pour traitement en local sont symbolisées par les diverses connexions 23 à 27 sur la figure. En plus du traitement local, il faut envoyer au superviseur l'information concernant le défaut : ceci est obtenu par un autre type de message, décrit plus loin sous le nom "S", qui est créé dans un émetteur, par exemple RPE2.

Le débit de données est beaucoup plus faible dans la voie montante que dans la voie descendante, les fibres optiques y sont donc plus de plus petite section que celles de la voie descendante, et les sources de lumière dans la voie montante sont des diodes électro-luminescentes, alors que dans la voie descendante ce sont des lasers, beaucoup plus coûteux. C'est pour cette raison qu'on utilise un répartiteur optique pour envoyer de la lumière dans plusieurs fibres à partir d'un seul laser, par exemple dans DPE2 ou DPE5.

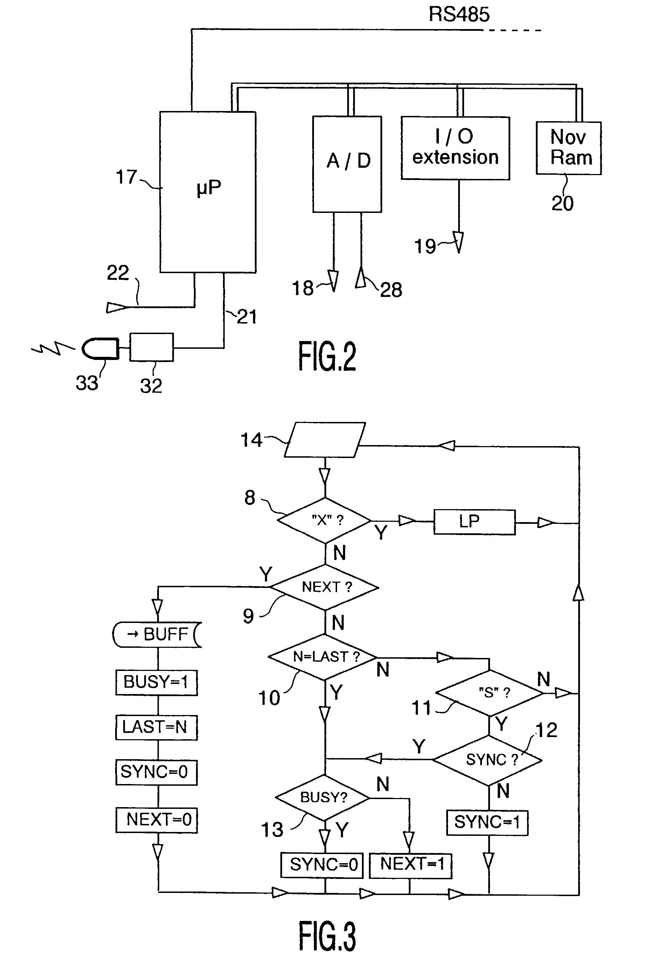

Un récepteur de voie montante comprend un ensemble processeur schématiquement illustré sur la figure 2, basé sur un micro-processeur 17, par exemple de type 8052. Ce processeur comprend une mémoire RAM interne de 256 bits, et on ne souhaite pas lui ajouter un boîtier de mémoire supplémentaire. Il faut donc que le système fonctionne sans requérir plus de mémoire. Ce processeur est connecté :
- à une ligne de données série 21 venant d'un convertisseur optique/électrique 32-33 qui reçoit la lumière d'une fibre optique. i
- à une ligne de données série 22 de laquelle il reçoit des signaux de management et des informations,
- au bus RS485, par lequel il communique avec l'émetteur associé et sur lequel il peut aussi recevoir des signaux de management,
- à un bus de type I2C, relié à des constituants locaux parmi lesquels se trouvent entre autres :
   - un convertisseur analogique / numérique (A/D) destiné entre autres à fournir sur une sortie analogique 18, pour affichage, des grandeurs intéressant le personnel d'entretien, comme une puissance lumineuse, ou une valeur de réglage de gain.
   - une fonction d'entrée sortie (I/O) avec une sortie 19 reliée à des dispositifs de signalisation, tels que des relais de commande d'alarmes ou des voyants indicateurs, ou à un relais de sécurité qui commande l'arrêt du laser de l'émetteur de voie principale,
   - une mémoire 20 pour l'archivage des événements importants.

Le logiciel de ce processeur a entre autres pour fonctions la réception, l'enregistrement, et la transmission vers l'émetteur des informations reçues par le récepteur, la prise de décision immédiate en cas de défaut du laser ou d'une fibre, la transmission de toute information lorsque cela est nécessaire, l'enregistrement des événements importants.

Un émetteur de voie montante comprend aussi un micro-processeur, avec un environnement essentiellement identique à celui illustré sur la figure 2 pour un récepteur, mais dans lequel certains dispositifs périphériques ont des rôles différents. Il comprend une entrée 28 pour recevoir divers signaux, qu'un convertisseur analogique / numérique convertit en valeurs numériques. La ligne de données série 21 conduit à un modulateur 32 et à la diode électroluminescente 33 qui émet de la lumière dans une fibre optique.

La communication est possible dans les deux sens entre un émetteur, par exemple RPE1, et des récepteurs, par exemple RPR2, RPR3, RPR4, via le bus RS485, et un émetteur de voie montante (RPE) agit comme un superviseur pour les récepteurs (RPR) situés en dessous. Par exemple RPE1 agit en superviseur vis-à-vis de RPR2, RPR3, RPR4. Ces trois récepteurs de voie montante sont interrogés tour à tour, selon une procédure dite de "polling", par l'émetteur de voie montante RPE1, sur le bus RS485. Il en est de même pour RPE2 vis-à-vis de RPR5 et RPR6. Chacun des bus RS485 peut en outre être relié à un organe extérieur communiquant avec le réseau, par exemple avec un réseau "domotique" présent dans le même lieu, ou avec une conciergerie ou un service d'entretien, etc.

Par contre, un émetteur dans la voie montante n'a aucun moyen pour vérifier s'il a reçu correctement tous les messages de gestion venant d'aval qui lui sont destinés, et en outre plusieurs émetteurs de voie montante sont susceptibles d'envoyer un message en même temps : par exemple RPE5 et RPE6 sont susceptibles d'envoyer ensemble des messages à l'embranchement L5. Il n'est pas possible d'accuser réception de la part d'un récepteur RPR pour un message d'un émetteur RPE. Du fait que la mémoire tampon, dans laquelle un récepteur de voie montante enregistre les messages reçus de la fibre optique, a une taille réduite et ne peut contenir qu'un message, tout message reçu d'aval doit être transféré dès que possible vers l'amont, de façon à libérer la mémoire. Mais pour transférer un message, un récepteur de voie montante doit être interrogé par l'émetteur de voie montante auquel il est relié par le bus RS485. Cet émetteur peut être occupé à une tâche longue et ne pas procéder au "polling" pendant un moment. Alors, pendant qu'il attend l'émetteur de voie montante, le récepteur de voie montante ne peut pas recevoir d'autre message de l'aval puisqu'il n'a pas pu vider sa mémoire. Et pendant ce temps il arrive d'autres messages sur la fibre. C'est pour répondre à ce problème qu'une procédure particulière a été imaginée pour ne pas perdre d'informations.

Un émetteur (RPE) retransmet tous les messages qui arrivent d'aval, et y ajoute des messages locaux. Cette pluralité de messages constitue une "séquence" de messages. Chaque message comprend un code de reconnaissance indiquant son origine. Un message sera désigné dans la présente description par le nombre qui représente son origine, par exemple "5" désigne un message fourni initialement par RPR5, "3" désigne un message fourni initialement par RPR3, etc.

Une séquence de messages comporte en outre un message de synchronisation, qui a une longueur constante et sera désigné par "S", qui permet aux récepteurs de caler leur horloge et donc de comprendre la suite des messages. En outre, ce message a deux usages : en plus de la synchronisation proprement dite, il contient des informations en provenance d'un lieu, et de son récepteur de voie descendante. Par exemple un message "S" émis par RPE2 contient des informations concernant le lieu L5, fournies notamment par le récepteur DPR2 du chemin principal.

Une séquence de messages comprend aussi des messages dits de sécurité, à usage local, c'est-à-dire destinés exclusivement à l'embranchement situé immédiatement en amont, et qui ne seront pas transmis jusqu'au centre. Ils ont également une longueur constante et seront désignés par "X". Eux aussi contiennent des informations concernant le lieu L5, fournies notamment par le récepteur DPR2 du chemin principal. En pratique un message "X" a le même contenu qu'un message "S". Un message "X" contient par exemple un code signifiant "tout va bien" ou au contraire "arrêter le laser" ; si une action correspondante est nécessaire, elle est exécutée sur place dès que le message "X" est reçu. Par exemple un message "X" reçu par RPR2 est traité et exécuté au niveau de RPR2/DPE2.

Pour accélérer la transmission d'un message de sécurité à usage local, un tel message est inséré systématiquement à chaque fois entre deux messages venant d'aval, retransmis par un émetteur.

Chaque message reçu d'aval et retransmis est donc suivi par un message "X", et chaque séquence de messages comprend donc les messages venant d'aval en alternance avec des messages "X" (le même message "X" étant répété autant de fois que nécessaire), le tout suivi par le propre message "S" de l'émetteur de voie montante. Comme "X" et "S" ont une longueur constante, un récepteur est capable de discerner tous les messages les uns des autres.

Un émetteur de voie montante, par exemple RPE2, émet sans arrêt, c'est-à-dire que le processus de création de la séquence de messages est répété indéfiniment, les messages étant mis à jour, le cas échéant, entre deux répétitions.

La structure des séquences de messages apparaîtra plus clairement grâce aux exemples non limitatifs suivants :
- l'émetteur de voie montante RPE6 émet une séquence "S X S X S X S X...", constituée par le message "S" contenant l'information en provenance de DPR6, avec un message "X" inséré à chaque fois entre deux messages S. Le message "S" en provenance de RPE5 est re-nommé "5" par RPR5, et le message "S" en provenance de RPE6 est re-nommé "6" par RPR6, et ils sont fournis via le bus RS485 à l'émetteur RPE2.
- l'émetteur de voie montante RPE2 émet dans la fibre optique une séquence "S X 5 X 6 X S X 5 X 6 X S..", dans laquelle il y a toujours un message "X" entre deux messages et, en faisant abstraction des messages "X", un message "S" après chaque série "5", "6". C'est la réception du message "S" qui indique que les autres messages 5 et 6 ont tous été envoyés avant,
- l'émetteur de voie montante RPE1 envoie dans la fibre optique une séquence "S X 5 X 6 X 2 X 3 X 4 X S..", dans laquelle :
   * "5", "6", "2" représentent les messages 5, 6, S, reçus par RPR2, S étant re-nommé "2",
   * "3" représente un message "S" reçu de DPR3 par RPR3 et re-nommé "3",
   * "4" représente un message "S" reçu de DPR4 par RPR4 et re-nommé "4",
   * "S" est le propre message de DPR1.
Il y a toujours un message "X" entre deux messages, et un message "S" après "5", "6", "2", "3", "4".

Sur un bus RS485, un émetteur, par exemple RPE1, interroge les récepteurs, par exemple RPR2, RPR3, RPR4, pour demander en réponse un message. L'arrangement des données sur le bus RS485 est banal et n'importe quelle procédure connue peut être utilisée. Dans le lieu L2, on trouve par exemple sur le bus RS485, en réponse à une interrogation de la part de RPE1 s'adressant à RPR2, un message "5" issu du récepteur RPR2, puis au cours d'une interrogation suivante un message "6", puis un message "2". Lorsque RPE1 a obtenu le message "2", il sait que la séquence issue de RPR2 est complète, et il interroge RPR3, et en obtient un message "3". Lorsque RPE1 a obtenu le message "3", il sait que la séquence issue de RPR3 est complète, et il interroge RPR4, et en obtient le message "4". Le logiciel est simple, il comporte essentiellement un test "le numéro de reconnaissance du message reçu est il celui du récepteur interrogé ?"; si c'est le cas, un autre récepteur est interrogé, sinon le même récepteur est interrogé à nouveau. En d'autres termes, par exemple, le processeur teste si le dernier message fourni dans un lieu donné L2 à l'émetteur RPE1, en réponse à l'interrogation périodique faite par ce dernier, est celui "S" qui a été introduit dans la séquence par l'émetteur RPE2 d'un lieu immédiatement aval L5 après que cet émetteur RPE2 d'un lieu immédiatement aval ait répété tous les messages venant des récepteurs RPR5, RPR6 de ce lieu immédiatement aval, et qui a été ultérieurement nommé "2" lorsqu'il a été fourni par RPR2 à RPE1, et si c'est le cas, un autre récepteur RPR3 du même lieu donné L2 est interrogé, sinon le même récepteur RPR2 est interrogé à nouveau.

Pour réaliser ce test, le processeur d'un émetteur est donc programmé en tenant compte des codes de reconnaissance des messages engendrés par les récepteurs avec lesquels il communique par le bus RS485, par exemple le processeur de l'émetteur RPE1 a dans une mémoire permanente les codes des messages "2", "3", et "4". Un émetteur n'a pas plus de mémoire qu'un récepteur et il retransmet un message dès qu'il l'a obtenu sur le bus. Après chaque message retransmis depuis le bus vers la fibre optique, l'émetteur transmet un message "X". Lorsque tous les récepteurs ont été interrogés et que leurs messages ont été retransmis tour à tour avec un message "X" chaque fois entre deux messages, l'émetteur transmet le message "S" local. Un émetteur ne reçoit qu'un message par interrogation, il y a donc un temps mort entre chaque message, indiqué à chaque fois par deux points sur la figure.

Le processus réalisé par logiciel dans un récepteur RPR et conduisant aux séquences de messages exemplifiées plus haut est illustré par le diagramme de la figure 3. Dans ce processus, les variables suivantes sont utilisées :
- BUSY est un drapeau indiquant que la mémoire tampon est occupée,
- SYNC est un drapeau indiquant qu'un message "S" de synchronisation et d'information locale a bien été reçu,
- NEXT est un drapeau indiquant que le prochain message peut être enregistré,
- LAST est une variable mémorisant le numéro d'un message,
- N est le numéro du message qui vient d'être reçu et est en cours de traitement.

Un drapeau qui vaut "un" sera dit "levé", un drapeau qui vaut "zéro" sera dit "abaissé".

En haut du diagramme, 14 représente la lecture et l'identification d'un message arrivant. La référence 8 représente un test logique "X ?", à savoir "le message en question est il un message de sécurité, ou message local, de type X ?",
- si la réponse au test 8 est oui (Y), le message est traité immédiatement dans un bloc LP. Comme il s'agit d'un message à usage local, il n'est pas transmis vers l'amont, donc après traitement, le processus retourne en 14 à la lecture des messages qui arrivent.
- si la réponse au test 8 est non (N), un test 9 NEXT ? est pratiqué : "le drapeau NEXT est il levé, c'est-à-dire le prochain message doit il être enregistré ?",
   - si la réponse au test 9 est oui (Y), une série de traitements est réalisée dans les blocs →BUFF, BUSY=1, LAST=N, SYNC=0, NEXT=0, puis le processus retourne en 14 à la lecture des messages qui arrivent. Dans le bloc →BUFF, le message est enregistré dans une mémoire tampon, où il est disponible pour être transmis sur le bus RS485 en réponse à une interrogation. Dans le bloc BUSY=1, le drapeau BUSY est levé signifiant que la mémoire du récepteur est occupée. Dans le bloc LAST=N, la variable LAST prend le numéro du message reçu. Dans le bloc SYNC=0, le drapeau SYNC est abaissé. Dans le bloc NEXT=0, le drapeau NEXT est abaissé, ce qui signifie qu'à priori le prochain message qui va être reçu n'est pas celui qu'on désire enregistrer.
   - si la réponse au test 9 est non (N), un test 10 N=LAST ?, est pratiqué : "le message en cours porte-t-il le numéro LAST ?",
      - si la réponse au test 10 est oui (Y), un test 13 BUSY ? est pratiqué : "la mémoire tampon est elle occupée ?". Si la réponse est oui (Y), le drapeau SYNC est abaissé, puis le processus retourne en 14 à la lecture des messages qui arrivent, et si la réponse est non (N), le drapeau NEXT est levé, puis le processus retourne en 14 à la lecture des messages qui arrivent.
      - si la réponse au test 10 est non (N), un test 11 "S" ? est pratiqué : "le message est il un message de type S ?",
         - si la réponse au test 11 est non (N), le processus retourne immédiatement à la lecture des messages qui arrivent.
         - si la réponse au test 11 est oui (Y), un test vérifiant si le drapeau SYNC est levé est pratiqué dans le bloc 12,
         - si la réponse au test 12 est non (N), le drapeau SYNC est levé puis le processus retourne en 14 à la lecture des messages qui arrivent.
         - si la réponse au test 12 est oui (Y), le processus va au test 13.

   Dans ce diagramme, aucune étape ne prévoit d'abaisser le drapeau BUSY. Ce drapeau est abaissé à la suite de chaque interruption du processus par une interrogation de la part de l'émetteur.
   On peut aisément se rendre compte que cet ensemble d'opérations conduit bien à la procédure décrite plus haut. Par exemple, dans une séquence de messages reçue par RPR1 comme celle illustrée plus haut (SX5X6X2X3X4XS), après le message local et de synchronisation S, que l'on supposera avoir transité par les tests 8, 9, 10, 11, 12 et avoir levé le drapeau SYNC, le message "X" est traité en local, le message 5 arrive alors. Supposons que le drapeau NEXT est levé, le test "NEXT?" répond oui. Le message est enregistré (opération → BUFF), le drapeau BUSY est levé, le numéro 5 est mémorisé (LAST = 5), les drapeaux SYNC et NEXT sont abaissés, puis le processus revient en 14 et le message 6 qui suit est lu. Il ne peut pas être enregistré car NEXT est abaissé (test 9), il n'a pas le numéro 5 qui a été mémorisé pour LAST, le processus arrive donc au test 11, qui ramène à la lecture du message suivant. Le message 6 est donc tout simplement négligé. Il en sera de même des messages suivants qui suivront tous le même chemin puisqu'ils n'ont pas le numéro 5 et que NEXT est toujours abaissé. Quand arrive le message S, il passe par 8, 9, 10, 11, 12 et lève le drapeau SYNC. Quand le message 5 arrive de nouveau, NEXT est toujours abaissé, mais N = 5 = LAST et on passe directement au test 13. Comme la mémoire est toujours occupée (BUSY est levé), SYNC est remis à zéro et le message 5 est lui aussi négligé. Supposons maintenant que le "polling" de la part du superviseur se produise à ce moment là : le message 5 qui est dans la mémoire tampon est transmis sur le bus RS485 et le drapeau BUSY est abaissé : maintenant la mémoire de RPR1 n'est plus occupée. Néanmoins RPR1 n'a pas comptabilisé l'ordre de déroulement des messages qui sont arrivés sur la fibre, donc il ne sait pas si le message qui va arriver est justement celui qui doit être transmis après celui qui vient de l'être. Dans le doute il va donc le négliger, puisque NEXT est toujours abaissé. Le message 6 qui était pourtant bon à prendre est donc négligé, puis de même les messages 2, 3, 4, S. Un message 5 arrive à nouveau, puisque chaque séquence est retransmise sans arrêt. Le test 10 répond oui, le test 13 répond non, et alors le drapeau NEXT est levé. Ainsi RPR1 reconnaît qu'il a déjà reçu et retransmis un message 5, il se remet donc en état de recevoir le message suivant. Le message 6 est enregistré (opération → BUFF), le drapeau BUSY est levé, le numéro 6 est mémorisé (LAST = 6), les drapeaux SYNC et NEXT sont abaissés, puis le processus revient en 14 et le processus se poursuit de la même façon, ce qui conduit finalement à l'enregistrement et à la retransmission de tous les messages dans l'ordre 5.. 6.. 2.. 3.. 4..
   La branche avec les test 11, 12 à droite sur la figure 3 sert à vérifier les occurrences du signal S, pour détecter d'éventuelles anomalies dans le rythme d'arrivée des messages S.
   Les procédures décrites ci-dessus concernent le flux de données via les émetteurs de voie montante et les récepteurs de voie montante. Les signaux de télévision descendant par le chemin principal descendant sont traités de façon connue et ne font pas partie de l'invention.

## Revendications

1. Procédé pour transmettre des messages remontants dans un réseau câblé de télévision comprenant un chemin arborescent spécifique pour la remontée de messages, chemin qui comprend une pluralité de branches dites montantes, chacune constituées d'une fibre optique, procédé **caractérisé en ce que**, dans un embranchement entre une branche amont et plusieurs branches aval, comportant un émetteur muni d'un convertisseur pour engendrer, à partir d'une séquence de messages sous forme d'un signal électrique, un signal lumineux transmis vers l'amont, et , pour chaque branche aval, un récepteur muni d'un convertisseur qui, à partir d'un signal lumineux venant de la branche aval, engendre un message sous forme d'un signal électrique,
- on enregistre, dans une mémoire de réception, un message reçu d'aval et muni d'un code de reconnaissance,
- à partir de messages reçus par les récepteurs et d'un message, dit de type local, généré dans l'embranchement même pour être transmis vers l'amont, on détermine une séquence de messages à émettre qui comprend d'abord des messages qui répètent en différé les messages reçus par les récepteurs et, à la fin, le message de type local, dont la présence indique que la séquence est terminée,
- on répète indéfiniment la même séquence, avec mise à jour éventuelle du contenu d'un message.

2. Procédé selon la revendication 1, **caractérisé en ce que** l'on interroge périodiquement les mémoires de réception, et on enregistre dans la mémoire de réception un message reçu d'aval, seulement si le message enregistré précédemment a été lu par l'émetteur.

3. Procédé selon la revendication 2, **caractérisé en ce que**, après qu'un certain message a été fourni à l'émetteur en réponse à une interrogation, et pendant que d'autres messages continuent d'arriver au récepteur de façon répétitive, avec parmi eux le dit certain message, on attend une nouvelle occurrence du dit certain message sans procéder à aucun enregistrement, et on enregistre alors le message qui suit le dit certain message.

4. Procédé selon la revendication 2, **caractérisé en ce que** l'on teste si le dernier message, reçu en réponse à l'interrogation périodique d'un récepteur, est un message de type local en provenance de l'embranchement aval et,
- dans ce cas, on procède à l'interrogation périodique d'un autre récepteur,
- dans le cas contraire, on continue à interroger à nouveau le même récepteur.

5. Procédé selon l'une quelconque des revendications précédentes, **caractérisé en ce que** l'on insère un message destiné exclusivement à l'embranchement situé immédiatement en amont, entre chacun des autres messages.

6. Réseau câblé de télévision comprenant un chemin arborescent, dit principal, que des signaux suivent en partant d'un centre de transmission, et qui comprend une pluralité de branches dites descendantes, chacune constituées d'une fibre optique, et un second chemin arborescent, dit montant, que des signaux suivent pour remonter vers le centre de transmission, et qui comprend une pluralité de branches dites montantes, chacune constituées d'une fibre optique et respectivement parallèle à une branche du chemin principal, **caractérisé en ce que**, le réseau comportant au moins un embranchement entre une branche amont et plusieurs branches aval, un tel embranchement comporte
- un récepteur pour chaque branche aval, qui comprend
- un convertisseur pour, à partir d'un signal lumineux venant de la branche aval, engendrer un message sous forme d'un signal électrique,
- et un processeur muni d'instructions pour commander l'enregistrement, dans une mémoire de réception, de ce message, muni d'un code de reconnaissance,
- un émetteur qui comprend
- un processeur muni d'instructions pour
- à partir de données numériques représentant, d'une part des messages reçus par les récepteurs et, d'autre part un message, dit de type local, généré dans l'embranchement même pour être transmis vers l'amont, déterminer une séquence de messages à émettre, cette séquence comprenant
- d'abord des messages qui répètent en différé les messages reçus par les récepteurs,
- et à la fin le message de type local, dont la présence indique que la séquence est terminée,
- et pour commander indéfiniment la répétition d'une même séquence, avec mise à jour éventuelle du contenu d'un message,
- et un convertisseur pour engendrer, à partir de la séquence de messages, un signal lumineux transmis vers l'amont.

7. Réseau câblé de télévision selon la revendication 6, **caractérisé en ce que** des instructions du processeur de l'émetteur commandent une procédure d'interrogation périodique des mémoires de réception, et des instructions du processeur du récepteur permettent l'enregistrement dans la mémoire de réception d'un message reçu d'aval, seulement si le message enregistré précédemment a été lu par l'émetteur.

8. Réseau câblé de télévision selon la revendication 7, **caractérisé en ce que**, après qu'un certain message a été fourni à l'émetteur en réponse à une interrogation, et pendant que d'autres messages continuent d'arriver au récepteur de façon répétitive, avec parmi eux le dit certain message, des instructions du processeur du récepteur commandent d'attendre une nouvelle occurrence du dit certain message sans procéder à aucun enregistrement, et d'enregistrer alors le message qui suit le dit certain message.

9. Réseau câblé de télévision selon la revendication 7, **caractérisé en ce que** des instructions du processeur de l'émetteur commandent de tester si le dernier message reçu en réponse à l'interrogation périodique d'un récepteur, est un message de type local en provenance de l'embranchement aval et,
- dans ce cas, de procéder à l'interrogation périodique d'un autre récepteur,
- dans le cas contraire, de continuer à interroger à nouveau le même récepteur.

10. Réseau câblé de télévision selon l'une quelconque des revendications 6 à 9, **caractérisé en ce que** des instructions du processeur de l'émetteur commandent l'insertion d'un message destiné exclusivement à l'embranchement situé immédiatement en amont, entre chacun des autres messages.

11. Station intermédiaire, dite "embranchement", destinée à être utilisée dans un réseau câblé arborescent de télévision, entre une branche amont, constituée d'une fibre optique transmettant des signaux en provenance d'un centre de transmission, et plusieurs branches aval, constituées chacune d'une fibre optique transmettant des signaux vers le centre de transmission, **caractérisée en ce qu'**elle comporte
- un récepteur pour chaque branche aval, qui comprend
- un convertisseur pour, à partir d'un signal lumineux venant de la branche aval, engendrer un message sous forme d'un signal électrique,
- et un processeur muni d'instructions pour commander l'enregistrement, dans une mémoire de réception, de ce message, muni d'un code de reconnaissance,
- un émetteur qui comprend
- un processeur muni d'instructions pour
- à partir de données numériques représentant, d'une part des messages reçus par les récepteurs et, d'autre part un message, dit de type local, généré dans l'embranchement même pour être transmis vers l'amont, déterminer une séquence de messages à émettre, cette séquence comprenant
- d'abord des messages qui répètent en différé les messages reçus par les récepteurs,
- et à la fin, le message de type local, dont la présence indique que la séquence est terminée,
- et pour commander indéfiniment la répétition d'une même séquence, avec mise à jour éventuelle du contenu d'un message,
- et un convertisseur pour engendrer, à partir de la séquence de messages, un signal lumineux transmis vers l'amont.

12. Station intermédiaire selon la revendication 11, **caractérisée en en ce que** des instructions du processeur de l'émetteur commandent une procédure d'interrogation périodique des mémoires de réception, et des instructions du processeur du récepteur permettent l'enregistrement dans la mémoire de réception d'un message reçu d'aval, seulement si le message enregistré précédemment a été lu par l'émetteur.

13. Station intermédiaire selon la revendication 12, **caractérisée en ce que**, après qu'un certain message a été fourni à l'émetteur en réponse à une interrogation, et pendant que d'autres messages continuent d'arriver au récepteur de façon répétitive, avec parmi eux le dit certain message, des instructions du processeur du récepteur commandent d'attendre une nouvelle occurrence du dit certain message sans procéder à aucun enregistrement, et d'enregistrer alors le message qui suit le dit certain message.

14. Station intermédiaire selon la revendication 12, **caractérisée en ce que** des instructions du processeur de l'émetteur commandent de tester si le dernier message reçu en réponse à l'interrogation périodique d'un récepteur, est un message de type local en provenance de l'embranchement aval et,
- dans ce cas, de procéder à l'interrogation périodique d'un autre récepteur,
- dans le cas contraire, de continuer à interroger à nouveau le même récepteur.

15. Station intermédiaire selon l'une quelconque des revendications 11 à 14, **caractérisée en ce que** des instructions du processeur de l'émetteur commandent l'insertion d'un message destiné exclusivement à l'embranchement situé immédiatement en amont, entre chacun des autres messages.

## Claims

1. A method of transmitting upstream messages in a cable television network comprising a specific tree-like path for sending messages upstream, which path includes a plurality of upstream branches each formed by an optical fiber, which method is characterized in that, in a junction between an upstream branch and various downstream branches, comprising a transmitter having a converter for generating a light signal transmitted upstream on the basis of a sequence of messages in the form of an electric signal, and, for each downstream branch, a receiver having a converter which generates a message in the form of an electric signal on the basis of a light signal coming from the downstream branch,
- a message received from downstream and having a recognition code is written in a receiver memory,
- based on messages received by the receivers and a message, called local message, generated in the junction itself for being transmitted upstream, a sequence of messages to be transmitted is determined which first comprises messages that repeat with a delay the messages received by the receivers and, in the end, the local message whose presence indicates that the sequence is terminated,
- the same sequence is repeated indefinitely with a possible updating of the contents of a message.

2. A method as claimed in Claim 1, characterized in that the receiver memories are periodically polled and a message received from downstream is not stored in the receiver memory until the transmitter has read the previously entered message.

3. A method as claimed in Claim 2, characterized in that After a certain message has been supplied to the transmitter in response to a polling, and while other messages continue to arrive at the receiver in a repetitive way, with amongst them said certain message, a new appearance of said certain message is advantageously awaited without proceeding to any storing operation, and then the message following such certain message is written in the memory.

4. A method as claimed in Claim 2, characterized in that a test is made whether the most recent message received in response to the periodic polling of a receiver is a local message coming from the downstream junction and,
- in that case, the periodic polling of another receiver is proceeded to,
- in the opposite case, the same receiver is continued to be polled.

5. A method as claimed in any one of the preceding claims, characterized in that a message exclusively intended for the junction situated immediately upstream is inserted between pairs of the other messages.

6. A cable television network comprising a tree-like path, called main path, that signals follow leaving a transmission center, and which comprises a plurality of branches, called downstream branches, each formed by an optical fiber, and a second tree-like path, called upstream path, that signals follow to go upstream to the transmission center, and which comprises a plurality of branches, called upstream branches, each formed by an optical fiber and running in parallel with a branch of the main path, respectively, characterized in that, while the network comprises at least one junction between an upstream branch and various downstream branches, such a junction comprises
- a receiver for each downstream branch, which comprises
- a converter for generating a message in the form of an electric signal on the basis of a light signal coming from the downstream branch,
- and a processor having instructions for commanding the storage of this message with a recognition code in a receiver memory,
- a transmitter which comprises
- a processor having instructions for
- determining a sequence of messages to be transmitted on the basis of digital data representing, on the one hand, messages received by the receivers and, on the other hand, a message called local message generated in the junction itself to be transmitted in the upstream direction, this sequence comprising
- firstly, messages that repeat with a delay the messages received by the receivers, and
- in the end, the local message, whose presence indicates that the sequence is terminated,
- and for indefinitely commanding the repetition of the same sequence while the contents of a message are updated as required,
- and a converter for generating, based on the message sequence, a light signal transmitted in the upstream direction.

7. A cable television network as claimed in Claim 6, characterized in that instructions of the transmitter processor command a periodic polling procedure of the receiver memories, and instructions of the receiver processor permit to store in the receiver memory a message received from downstream, only if the message stored previously has been read by the transmitter.

8. A cable television network as claimed in Claim 7, characterized in that, after a certain message has been supplied to the transmitter in response to a polling, and while other messages continue to arrive at the receiver in a repetitive way, with amongst them said certain message, instructions of the processor of the receiver command the waiting for a new appearance of said certain message without proceeding to any storage operation, and thus to store the message that follows said certain message.

9. A cable television network as claimed in Claim 7, characterized in that instructions of the processor of the transmitter command to test whether the most recently received message in response to the periodic polling of the receiver is a message of the local type coming from the downstream junction and,
- in that case to proceed with the periodic polling of another receiver,
- in the opposite case, to continue to poll the same receiver.

10. A cable television network as claimed in any one of the Claims 6 to 9, characterized in that instructions of the processor of the transmitter command the insertion of a message exclusively intended for the junction situated immediately upstream between each pair of the other messages.

11. An intermediate station called "junction" intended to be used in a tree-like cable television network, between an upstream branch formed by an optical fibre transmitting signals coming from a transmission center, and various downstream branches formed each by an optical fiber transmitting signals to the transmission center, characterized in that the intermediate station comprises
- a receiver for each downstream branch, which comprises
- a converter for generating a message in the form of an electric signal on the basis of a light signal coming from the downstream branch,
- and a processor having instructions for commanding the storage of this message with a recognition code in a receiver memory,
- a transmitter which comprises
- a processor having instructions for
- determining a sequence of messages to be transmitted on the basis of digital data representing, on the one hand, messages received by the receivers and, on the other hand, a message called local message generated in the junction itself to be transmitted in the upstream direction, this sequence comprising
- firstly, messages that repeat with a delay the messages received by the receivers, and
- in the end, the local message, whose presence indicates that the sequence is terminated,
- and for indefinitely commanding the repetition of the same sequence while the contents of a message are updated as required,
- and a converter for generating, based on the message sequence, a light signal transmitted in the upstream direction.

12. An intermediate station as claimed in Claim 11, characterized in that instructions of the processor of the transmitter command a periodic polling procedure of the receiver memories, and instructions of the processor of the receiver permit to store in the receiver memory a message received from downstream, only if the message stored previously has been read by the transmitter.

13. An intermediate station as claimed in Claim 12, characterized in that after a certain message has been supplied to the transmitter in response to a polling, and while other messages continue to arrive at the receiver in a repetitive way, with amongst them said certain message, instructions of the processor of the receiver command the waiting for a new appearance of said certain message without proceeding to any storage operation, and thus to store the message that follows said certain message.

14. An intermediate station as claimed in Claim 12, characterized in that instructions of the processor of the transmitter command to test whether the most recently received message in response to the periodic polling of the receiver is a message of the local type coming from the downstream junction and,
- in that case to proceed with the periodic polling of another receiver,
- in the opposite case, to continue to poll the same receiver.

15. An intermediate station as claimed in any one of the Claims 11 to 14, characterized in that instructions of the processor of the transmitter command the insertion of a message exclusively intended for the junction situated immediately upstream between each pair of the other messages.

## Patentansprüche

1. Verfahren zum Übertragen von rücklaufenden Nachrichten in einem Kabelfernsehnetz mit einem spezifischen Baumweg zum Rücklauf der Nachrichten, wobei der Weg eine Vielzahl sogenannter rücklaufender, jeweils aus einer Glasfaser gebildeter Zweige enthält, ein Verfahren dadurch gekennzeichnet, daß eine Verzweigung zwischen einem oberen und mehreren unteren Zweigen einen mit einem Wandler versehenen Sender enthält, der anhand einer Nachrichtensequenz in der Form eines elektrischen Signals ein nach oben übertragenes Lichtsignal auslöst, und für jeden unteren Zweig einen mit einem Wandler versehenen Empfänger, der anhand eines vom unteren Zweig kommenden Lichtsignals eine Nachricht in der Form eines elektrischen Signals auslöst,
- man nimmt in einem Empfangsspeicher eine von unten erhaltene, mit einem Erkennungskode versehene Nachricht auf,
- anhand der von den Empfängern erhaltenen Nachrichten und einer Nachricht sogenannten lokalen Typs, in der Verzweigung selbst erzeugt um nach oben übertragen zu werden, bestimmt man eine zu übertragende Nachrichtensequenz, die zuerst Nachrichten enthält, die die von den Empfängern erhaltenen Nachrichten versetzt wiederholen, und zuletzt die Nachricht lokalen Typs, deren Erscheinen das Ende der Sequenz anzeigt,
- man wiederholt dieselbe Sequenz beliebig, mit eventueller Aktualisierung des Nachrichteninhalts.

2. Verfahren nach Anspruch 1, dadurch gekennzeichnet, daß man die Empfangsspeicher regelmäßig abfragt, und man nimmt im Empfangsspeicher eine von unten erhaltene Nachricht nur dann auf, wenn das zuvor aufgenommene Signal vom Sender gelesen wurde.

3. Verfahren nach Anspruch 2, dadurch gekennzeichnet, daß nachdem dem Sender in Antwort auf eine Abfrage eine bestimmte Nachricht übermittelt wurde und während andere Nachrichten wiederholt zum Empfänger gelangen, mit unter ihnen die besagte gewisse Nachricht, man vorzugsweise ein erneutes auftreten der besagten gewissen Nachricht abwartet, ohne eine Aufnahme vorzunehmen, und nimmt dann die Nachricht auf, die der besagten gewissen Nachricht folgt.

4. Verfahren nach Anspruch 2, dadurch gekennzeichnet, daß man testet, ob die letzte erhaltene Nachricht, in Antwort auf das regelmäßige Abfragen eines Empfängers, eine Nachricht lokalen Typs von der untengelegenen Verzweigung ist, und
- nimmt in diesem Fall das regelmäßige Abfragen eines anderen Empfängers vor,
- und fragt im gegenteiligen Fall erneut weiterhin denselben Empfänger ab.

5. Verfahren nach einem beliebigen der vorhergehenden Ansprüche, dadurch gekennzeichnet, daß man eine ausschließlich für die direkt darüberliegende Verzweigung bestimmte Nachricht zwischen alle anderen Nachrichten einfügt.

6. Fernsehkabelnetzwerk mit einem sogenannten Hauptbaumweg, dem die Signale anhand eines Übertragungszentrums folgen, und der eine Vielzahl jeweils aus einer Glasfaser gebildeter, sogenannter vorlaufender Zweige enthält, und einem zweiten, sogenannten rücklaufenden Baumweg, dem die Signale zum Rücklauf in das Übertragungszentrum folgen, und der eine Vielzahl sogenannter rücklaufender, jeweils aus einer Glasfaser und parallel zum Hauptweg gebildeter Zweige enthält, dadurch gekennzeichnet, daß das Netzwerk mindestens eine Verzweigung zwischen einem oberen Zweig und mehreren unteren Zweigen aufweist und eine solche Verzweigung enthält
- einen Empfänger für jeden unteren Zweig, versehen mit
- einem Wandler, um anhand eines vom unteren Zweig kommenden Lichtsignal eine Nachricht in der Form eines elektrischen Signals auszulösen,
- und einen mit Anweisungen versehenen Prozessor zur Steuerung der Aufnahme dieser mit einem Erkennungskode versehenen Nachricht in einem Empfangsspeicher,
- einen Sender, versehen mit
- einem mit Anweisungen versehenen Prozessor, um
- anhand digitaler Daten, die einerseits von den Empfängern erhaltene Nachrichten und andererseits eine Nachricht sogenannten lokalen Typs darstellen, erzeugt in der Verzweigung selbst, um nach oben übertragen zu werden, eine zu sendende Nachrichtensequenz zu bestimmen, und diese Sequenz enthält
- zuerst Nachrichten, die die von den Empfängern erhaltenen Nachrichten versetzt wiederholen,
- und schließlich die Nachricht lokalen Typs, deren Erscheinen das Ende der Sequenz anzeigt,
- und zum beliebigen Steuern der Wiederholung einer selben Sequenz mit eventueller Aktualisierung des Inhalts einer Nachricht,
- und einen Wandler, um anhand der Nachrichtensequenz ein nach oben übertragenes Lichtsignal auszulösen.

7. Fernsehkabelnetzwerk nach Anspruch 6, dadurch gekennzeichnet, daß Prozessorbefehle des Senders ein regelmäßiges Abfragverfahren der Empfangsspeicher steuern und Prozessorbefehle des Empfängers das Aufzeichnen in einem Empfangsspeicher einer von unten erhaltenen Nachricht nur erlauben, wenn die zuvor aufgezeichnete Nachricht vom Sender gelesen wurde.

8. Fernsehkabelnetzwerk nach Anspruch 7, dadurch gekennzeichnet, daß nachdem dem Sender in Antwort auf eine Abfrage eine bestimmte Nachricht übermittelt wurde und während andere Nachrichten wiederholt zum Empfänger gelangen, mit unter ihnen die besagte gewisse Nachricht, steuern Prozessorbefehle des Empfängers, ein erneutes auftreten der besagten gewissen Nachricht abzuwarten, ohne eine Aufnahme vorzunehmen, und die Nachricht aufzunehmen, die der besagten gewissen Nachricht folgt.

9. Fernsehkabelnetzwerk nach Anspruch 7, dadurch gekennzeichnet, daß Prozessorbefehle des Senders steuern, zu testen, ob die letzte erhaltene Nachricht, in Antwort auf das regelmäßige Abfragen eines Empfängers, eine Nachricht lokalen Typs von der untengelegenen Verzweigung ist, und
- in diesem Fall das regelmäßige Abfragen eines anderen Empfängers vorzunehmen,
- und im gegenteiligen Fall erneut weiterhin denselben Empfänger abzufragen.

10. Fernsehkabelnetzwerk nach einem beliebigen der Ansprüche 6 bis 9, dadurch gekennzeichnet, daß Prozessorbefehle des Senders das Einfügen einer ausschließlich für die direkt darüberliegende Verzweigung bestimmten Nachricht zwischen allen anderen Nachrichten steuern.

11. Zwischenstation, sogenannte "Verzweigung", zur Verwendung in einem Baumkabelnetzwerk des Fernsehens zwischen einem obenliegenden, aus einer Glasfaser gebildeten Zweig zur Übertragung von aus einem Übertragungszentrum kommenden Signalen und mehreren untenliegenden Zweigen, jeweils aus einer Glasfaser gebildet zur Übertragung der Signale zum Übertragungszentrum, dadurch gekennzeichnet, daß sie enthält:
- einen Empfänger für jeden unteren Zweig, versehen mit
- einem Wandler, um anhand eines vom unteren Zweig kommenden Lichtsignal eine Nachricht in der Form eines elektrischen Signals auszulösen,
- und einen mit Anweisungen versehenen Prozessor zur Steuerung der Aufnahme dieser mit einem Erkennungskode versehenen Nachricht in einem Empfangsspeicher,
- einen Sender, versehen mit
- einem mit Anweisungen versehenen Prozessor, um
- anhand digitaler Daten, die einerseits von den Empfängern erhaltene Nachrichten und andererseits eine Nachricht sogenannten lokalen Typs darstellen, erzeugt in der Verzweigung selbst, um nach oben übertragen zu werden, eine zu sendende Nachrichtensequenz zu bestimmen, und diese Sequenz enthält
- zuerst Nachrichten, die die von den Empfängern erhaltenen Nachrichten versetzt wiederholen,
- und schließlich die Nachricht lokalen Typs, deren Erscheinen das Ende der Sequenz anzeigt,
- und zum beliebigen Steuern der Wiederholung einer selben Sequenz mit eventueller Aktualisierung des Inhalts einer Nachricht,
- und einen Wandler, um anhand der Nachrichtensequenz ein nach oben übertragenes Lichtsignal auszulösen.

12. Zwischenstation nach Anspruch 11, dadurch gekennzeichnet, daß Prozessorbefehle des Senders ein regelmäßiges Abfragverfahren der Empfangsspeicher steuern und Prozessorbefehle des Empfängers das Aufzeichnen in einem Empfangsspeicher einer von unten erhaltenen Nachricht nur erlauben, wenn die zuvor aufgezeichnete Nachricht vom Sender gelesen wurde.

13. Zwischenstation nach Anspruch 12, dadurch gekennzeichnet, daß nachdem dem Sender in Antwort auf eine Abfrage eine bestimmte Nachricht übermittelt wurde und während andere Nachrichten wiederholt zum Empfänger gelangen, mit unter ihnen die besagte gewisse Nachricht, steuern Prozessorbefehle des Empfängers, ein erneutes auftreten der besagten gewissen Nachricht abzuwarten, ohne eine Aufnahme vorzunehmen, und die Nachricht aufzunehmen, die der besagten gewissen Nachricht folgt.

14. Zwischenstation nach Anspruch 12, dadurch gekennzeichnet, daß Prozessorbefehle des Senders steuern, zu testen, ob die letzte erhaltene Nachricht, in Antwort auf das regelmäßige Abfragen eines Empfängers, eine Nachricht lokalen Typs von der untengelegenen Verzweigung ist, und
- in diesem Fall das regelmäßige Abfragen eines anderen Empfängers vorzunehmen,
- und im gegenteiligen Fall erneut weiterhin denselben Empfänger abzufragen.

15. Zwischenstation nach einem beliebigen der Ansprüche 11 bis 14, dadurch gekennzeichnet, daß die Prozessorbefehle des Senders das Einfügen einer ausschließlich für die direkt darüberliegende Verzweigung bestimmten Nachricht zwischen allen anderen Nachrichten steuert.
